# EUROPEAN PATENT APPLICATION

(11) **EP 0 829 434 A1**
(43) Date of publication of application: **18.03.1998**
(21) Application number: 97202799.9
(22) Date of filing: 12.09.1997
(51) Int. Cl.: B65G 17/08

(54) **Conveyor chain**

(30) Priority: 13.09.1996 NL 1004030
(71) Applicant: MCC Nederland B.V., NL-2691 GV 's-Gravenzande (NL)
(72) Inventor: Van Zijderveld, George Johannes, 2691 CN 's-Gravenzande (NL)
(74) Representative: Smulders, Theodorus A.H.J., Ir.

(57) **Abstract**

A conveyor chain consisting of metal chain links each having a rectangular conveying surface (1) and a hinge system situated under the conveying surface, comprising a centrally located hinge eye (2) on one side of the chain link and two spaced hinge eyes (3,3') located opposite thereto, the central eye (2) being located between the spaced eyes of an adjacent chain link and being connected therewith by means of a hinge pin (4), the central eye (2) being capable of hinging freely about the hinge pin (14) which is fitted in the spaced eyes with a clamped fit.

According to the invention, the loadability of the chain can be increased by at least 25% when the ratio between the width (A) of the central eye (2) and the sum of the widths (2B) of the two spaced eyes (3,3') is approximately 0.9 and when the total hinge width (A+2B) is in the range of 54 to 60 mm and the hinge pin diameter (D) is between 6.15 and 6.55 mm.

## Description

This invention relates to a conveyor chain consisting of metal chain links each having an essentially rectangular conveying surface and a hinge loop system situated under the conveying surface, comprising a centrally located hinge loop on one side of the chain link and two spaced hinge loops on the opposite side of the chain link, the central loop being located between the spaced loops of an adjacent chain link and being connected therewith by means of a hinge pin, the central loop having a diameter greater than the diameter of the hinge pin, and the spaced loops having such a diameter that the hinge pin can be fitted therein with a clamped fit.

Such a conveyor chain is known, for instance, from US-A-3,776,349 and can be used for conveying bottles, cans, etc., in e.g. breweries, soft drink bottling plants, etc. Such chains are known for use on straight conveyor tracks as well as for use on conveyor tracks which include bends, in which latter case the chain is capable of bending in the plane of conveyance and is known under the name of "flex chain".

The conventional chains of this type have a maximum loadability of about 5,000 N, i.e., upon application of a tensile force greater than the maximum loadability, the length of the chain increases unduly, so that the chain wheel driving the chain can no longer function properly.

For various applications it is desirable to have a chain available which has a load-bearing capacity greater than 5,000 N. An example of such an application is the use of such a chain for conveying crates with bottles therein. It is known that the loadability of the chain is determined by the dimensions of the hinge system and the hinge pin. This is known from, for instance, DE-A-2,025,711 (= CA-A-940475). In this publication it is proposed to increase the strength of a conveyor chain by forming the loops in a special manner, by successive punching and rolling. In this known conveyor chain the sum of the widths of the two spaced loops is approximately equal to the width of the central loop.

The object of the invention is to provide a conveyor chain that has a higher loadability than the chains known heretofore.

To that effect, the invention provides a conveyor chain of the aforementioned type, characterized in that the ratio between the width of the central loop and the sum of the widths of the two spaced loops is approximately 0.9, that the sum of the widths of the two spaced loops and of the central loop is in the range of 54 to 60 mm and that the diameter of the hinge pin is between 6.15 and 6.55 mm.

Preferably, the sum of the widths of the loops is in the range of 56.5 to 57.5 mm and more particularly this sum is 57 mm. The diameter of the hinge pin in new condition is preferably 6.35 + 0/-0.05 mm.

In conventional conveyor chains the hinge width, i.e., the width of the central hinge loop increased by the width of the two spaced loops is 42 mm and the diameter of the hinge pin is 6.35 mm.

Because upon increase of the tensile force on a conveyor chain of the present type the chain always breaks on the hinge, a skilled person confronted with the issue of increasing the loadability of a chain manufactured from a certain material will promptly consider making the hinge construction heavier.

To that effect, basically three possibilities are available. The first is to increase the material thickness of the hinge loops. This is undesirable because the links are punched from a plate of a fixed thickness, whereupon the hinge loops are bent, so that thickening the hinge loops leads to a link with a greater material thickness throughout, which is undesirable from the point of view of cost price. The second possibility is to increase the diameter of the hinge pin, and the third possibility is to increase the hinge width, that is, the width of the central loop and/or the width of the two spaced loops.

Because both the second and the third possibility do not require an undue amount of additional material and, at first sight, are economically acceptable in other respects as well, the skilled person will opt for a combination of the two possibilities.

According to the invention, it has now been found, surprisingly, that a considerable increase of the tensile strength of the known chain can be obtained by increasing only the hinge width and leaving the pin diameter basically unchanged. In fact, it has been found that increasing the pin diameter, contrary to what one would expect, results in a weakening of the hinge. An important economic advantage of not changing the hinge pin diameter is, in addition to a slight saving on the cost price of the hinge pin, that the chain wheels already available on the market, which are optimally tailored to chain links connected through hinge pins of a diameter of 6.35 mm, can be used without any problem.

It has been found that the increase of the hinge width, simple in itself, to 54-60 mm, and more particularly to about 57 mm, can yield an increase of the loadability by about 35% with respect to a chain link with a conventional hinge width of 42 mm, viz., from about 5,200 N to almost 7,100 N.

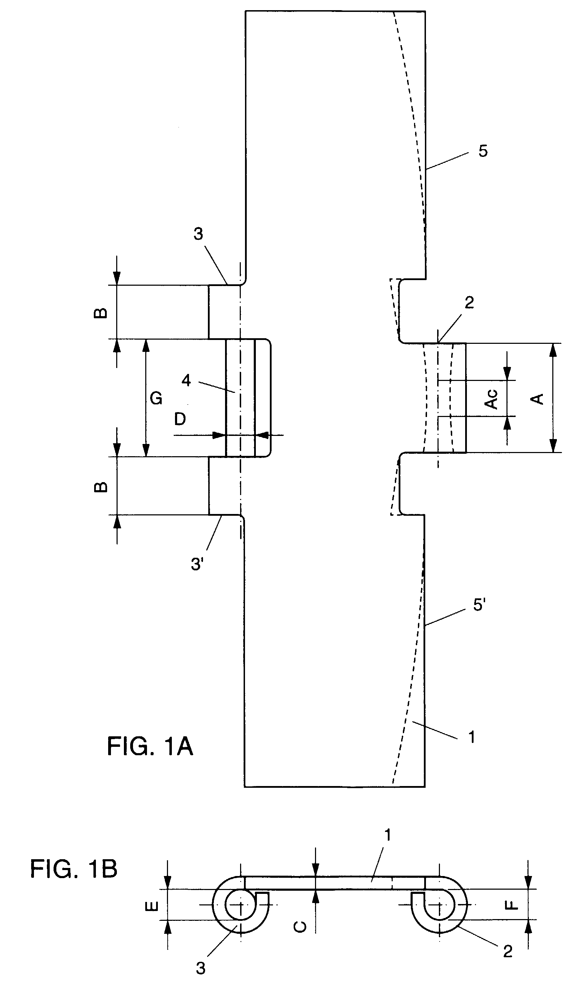

Hereinafter, the invention will be further explained on the basis of an exemplary embodiment with reference to Figs. 1a, b, which show a top plan view and a side elevational view of a chain link of the chain according to the invention.

Figs. 1a and b show a chain link according to the invention, which is manufactured from metal and has a basically rectangular conveying surface 1, a central hinge loop 2 located on one side of the conveying surface, and two spaced hinge loops 3 and 3' located on the other side of the conveying surface. The distance G between the two hinge loops 3 and 3' is greater than the width A of the hinge loop 2, so that successive chain links can be coupled to each other, with the central hinge loop 2 located between the hinge loops 3, 3', and connected therewith through a hinge pin 4 with a diameter D. The diameter E of the hinge loops 3 and 3' is somewhat less than the diameter D of the hinge pin, which in new condition is about 6.15 - 6.55 mm, preferably 6.35 + 0/-0.05 mm, so that the hinge pin can be secured therein with a clamped fit. The diameter F of the central hinge loop 2 is greater than the diameter of the hinge pin, in order that the chain can hinge on the central hinge loop. If the chain is a flex chain, then, to also enable movement of the chain in the plane of conveyance, that is, in the plane of the paper, the diameter of the central hinge loop is made greater at the opposite ends of that loop than in the central portion thereof. In the case of a flex chain, the front edges of the bearing surface of the chain, that is, the edges 5 and 5', also slant towards the sides of the chain, in order that these edges do not hinder the bending in the plane of conveyance. In the drawing, this is indicated by dotted lines. The thickness C of the chain link is about 3.1 mm. The foregoing relates both to known conveyor chains and to conveyor chains according to the invention.

The ratio between the width of the central loop 2 and the sum of the widths of the two spaced loops 3 and 3', that is, A/2B, is of importance for the loadability of the chain because the central loop, in which the hinge pin is loosely received, will yield sooner than the spaced loops, in which the hinge pin is secured with a clamped fit. According to a first aspect of the invention, this ratio is about 0.9.

According to a second aspect of the invention, the loadability of the chain is increased considerably by solely increasing the width of the total hinge, that is, the width of the two hinge loops 3 and 3' and that of the central hinge loop 2, so A+2B, to a magnitude in the range of 54 to 60 mm, so that the loadability increases by 25%, without requiring that the pin diameter be increased. Preferably, the hinge width is 57 mm, because then the increase of the loadability is even 35%.

## Claims

1. A conveyor chain consisting of metal chain links each having a basically rectangular conveying surface (1) and a hinge loop system situated under the conveying surface, comprising a centrally located hinge loop (2) on one side of the chain link and two spaced hinge loops (3, 3') on the opposite side of the chain link, the central loop being located between the spaced loops of an adjacent chain link and being connected therewith by means of a hinge pin (4), the central loop having a diameter greater than the diameter of the hinge pin, and the spaced loops having such a diameter that the hinge pin can be fitted therein with a clamped fit, characterized in that the ratio between the width (A) of the central loop and the sum (2B) of the widths of the two spaced loops is approximately 0.9, and that the sum (A+2B) of the widths of the two spaced loops (3) and of the central loop (2) is in the range of 54 to 60 mm and that the diameter of the hinge pin is between 6.15 and 6.55 mm.

2. A conveyor chain according to claim 1, characterized in that the chain can also bend in the plane of conveyance in that the front edges (5, 5') of the bearing surface of the links are beveled and in that the ends of the central loop (2) have a greater diameter than the central portion of that loop.

3. A conveyor chain according to claim 1 or 2, characterized in that the total hinge width (A+2B) is in the range of 56.5 to 57.5 mm and the hinge pin diameter is in the range of 6.30 to 6.35 mm.

4. A conveyor chain according to claim 1 or 2, characterized in that the total hinge width is 57 mm and the hinge pin diameter is in the range of 6.30 to 6.35 mm.
